## Europäisches Patentamt

## European Patent Office

## Office européen des brevets

(11) Veröffentlichungsnummer: **0 044 468**
**B1**

---

(12) **EUROPÄISCHE PATENTSCHRIFT**

(45) Veröffentlichungstag der Patentschrift:
**19.02.86**

(21) Anmeldenummer: **81105317.2**

(22) Anmeldetag: **08.07.81**

(51) Int. Cl.⁴: **F 16 L 59/02**, F 16 L 59/12, F 16 L 59/16

---

(54) **Wärmeisoliertes Rohrleitungselement und Rohrleitungssystem aus diesen Rohrleitungselementen sowie Verfahren zur Herstellung des Rohrleitungselementes und des Rohrleitungssystems.**

---

(30) Priorität: **17.07.80 HU 178180**

(43) Veröffentlichungstag der Anmeldung:
**27.01.82 Patentblatt 82/4**

(45) Bekanntmachung des Hinweises auf die Patenterteilung:
**19.02.86 Patentblatt 86/8**

(84) Benannte Vertragsstaaten:
**AT BE CH DE FR GB IT LI LU NL SE**

(56) Entgegenhaltungen:
**CH - A - 447 735**
**DE - A - 2 005 839**
**DE - A - 2 348 657**
**DE - A - 2 812 680**
**DE - A - 2 901 301**
**FR - A - 2 050 533**
**FR - A - 2 117 370**
**GB - A - 1 306 831**
**US - A - 3 744 823**

(73) Patentinhaber: **DUNA-TISZA KÖZI ALLAMI EPITÖIPARI VALLALAT, Klapka Gy. u.34, H-6001 Kecskemet (HU)**
Patentinhaber: **Epitéstudományi Intézet, Dávid Ferenc utca 6, H-1502 Budapest (HU)**
Patentinhaber: **MTA Természettudományi Kutato Laboratoriumai, Budaörsi ut 45, H-112 Budapest (HU)**

(72) Erfinder: **Kanyo, Miklos, Dipl. Bauing., Marx tér 10, H-6000 Kecskemét (HU)**
Erfinder: **Fay, Ferenc, Dipl. Bauing., Erkel utca 4, H-6000 Kecskemét (HU)**
Erfinder: **Füzesi, Pál, Dipl. Ing., Pethényi utca 4, H-1122 Budapest (HU)**
Erfinder: **Makai, László, Maschinening., Vörösmarty utca 3, H-5473 Tiszazug (HU)**
Erfinder: **Dezsényi, István, Dr. Dipl. Ing., Szépvölgyi ut 93, H-1037 Budapest (HU)**
Erfinder: **Babos, László, Dipl. Ing., Vág utca 13, H-1133 Budapest (HU)**
Erfinder: **Ludwig, Lajos, Dipl. Maschinening., Borbolya utca 10, H-1023 Budapest (HU)**
Erfinder: **Székely, Tamás, Dr. Dipl. chem., Abonyi utca 19, H-1146 Budapest (HU)**
Erfinder: **Nagy, Gábor, Dr. Dipl. Chem. Ing., Minerva utca 3, H-1118 Budapest (HU)**

(74) Vertreter: **Tischer, Herbert, Dipl.-Ing. et al, Patentanwälte Dipl.-Ing. Herbert Tischer Dipl.-Ing. Wolfgang Kern Albert-Rosshaupter-Strasse 65, D-8000 München 70 (DE)**

---

**Beschreibung**

Die Erfindung betrifft ein wärmeisoliertes Rohrleitungselement mit einem inneren Nutzrohrstück und einem dieses konzentrisch umgebenden Mantelrohrstück sowie einer zwischen dem Nutzrohrstück und dem Mantelrohrstück befindlichen Wärmeisolierstück. Des weiteren betrifft die Erfindung ein Rohrleitungssystem aus solchen Rohrleitungselementen, ein Verfahren zur Herstellung eines solchen Rohrleitungselementes und ein Verfahren zur Herstellung eines Rohrleitungssystems aus solchen Rohrleitungselementen.

Unter den zur Förderung von flüssigen und/oder gasförmigen Stoffen dienende Rohrleitungen spielen die Heiz- und Nutzwasserleitungen der Fernheizsysteme sowie die dem Transport von Warmwasser, industriellem Dampf und Kaltwasser dienenden Rohrleitungen eine bedeutende Rolle. Diese Leitungen tragen in aller Regel eine Wärmeisolierung. Derartige Isolierungen sind in vielfältigen Ausführungsformen bekannt. Bekannt sind auch Schutzvorrichtungen für derartige Leitungsrohre und Isolierungen zur Verhinderung ihrer Beschädigung durch äussere Krafteinwirkung.

Bei einem bekannten wärmeisolierenden Rohrleitungselement der genannten Art (GB-A-1 306 831) ist der Nachteil gegeben, dass das äussere Mantelrohrstück zweischichtig aufgebaut ist, indem es aus einer äusseren glasfaserverstärkten Polyesterharzschicht und einer inneren Schicht aus thermoplastischem Material besteht, die beide bis auf das innere Nutzrohrstück herabgezogen sind, mit dessen Endteil sie zusammenwirken. Durch diese Konstruktion wird zwar verhindert, dass Wasser von aussen durch das Mantelrohrstück in die Wärmeisolierschicht 3 eindringt und dort unter Umständen zu Beschädigungen, jedenfalls zu Beeinträchtigungen der Wärmeisolierwirkung des Materials führen kann, jedoch wird die Beseitigung von bereits während der Montage der Rohrleitungselemente innerhalb der Isolierung bzw. zwischen dieser und dem Nutzrohrstück vorhandenen Wassers nicht erreicht.

Bei einem anderen bekannten Isolierelement (DE-A-2 812 680), das ebenfalls zur Wärmeisolierung von Rohrleitungen Verwendung findet, bildet das Mantelrohrstück eine Umhüllung aus einem Gewebe, das auf der die zu isolierende Fläche berührenden Seite metallische Fäden aufweist. Eine Sicherung gegen aus der Umgebung eines solchen Rohrleitungselementes eindringendes Wasser ist bei dieser Konstruktion nicht vorgesehen, so dass die Wärmeisolierung des eigentlichen Isolierelementes, das aus Mineralfasern besteht, jederzeit durch derartiges Wasser beeinträchtigt werden kann. Zwar ist zwischen der Wärmeisolierschicht und dem Nutzrohrstück ein Metalldrahtgewebe vorgesehen, dieses bildet jedoch keine dampf- bzw. luftdurchlässige Schicht, sondern dient lediglich zum Zusammenhalten des Kerns des Isolierelementes.

Aus der DE-A-2 005 839 ist eine Wärmeisolierung mit porösen Abdeckteilen für die Teile eines Wärmeleitungssystems bekannt, bei dem die Nutzrohrstücke von einer wärmeisolierenden Hülle, die vorzugsweise als Halbschale ausgebildet ist, umgeben sind. Diese Isolierhülle weist keinerlei Abdeckung auf, so dass Wasser von aussen ungehindert in sie eindringen kann. Zwischen der Isolierhülle und dem Nutzrohrstück ist eine Schutzschicht aus Kunststoff oder Leichtmetall vorgesehen, die die Aufgabe hat, aus den Nutzrohrstücken bzw. deren Verbindungen austretende Flüssigkeit daran zu hindern, von innen in die Isolierung einzudringen. Zur Ableitung einer solchen Flüssigkeit dienen auf der inneren Oberfläche der Wärmeisolierung ausgebildete Rinnen. Auch hier weisen somit die Rohrleitungselemente keine Mittel auf, die nicht nur das Eindringen von Flüssigkeit oder Feuchtigkeit in die Wärmeisolierschicht von innen nach aussen, sondern auch von aussen nach innen verhindern.

Die Aufgabe der Erfindung besteht deshalb darin, das wärmeisolierte Rohrleitungselement der genannten Art so auszubilden, dass die Wärmeisolierschicht beidseitig gegen eindringendes Wasser oder eindringende Feuchtigkeit abgedichtet ist und gleichzeitig die Möglichkeit gegeben ist, bei der Herstellung derartiger Rohrleitungselemente und dem Zusammenbau solcher Rohrleitungselemente zu einem Leitungssystem sich auf der Nutzrohroberfläche bildende Feuchtigkeit sich später von selbst verflüchtigen zu lassen.

Diese Aufgabe wird erfindungsgemäss dadurch gelöst, dass sich zwischen dem Mantelrohrstück und der Wärmeisolierschicht mindestens eine wasserdichte Schutzschicht befindet, und dass zwischen dem Nutzrohrstück und der Wärmeisolierschicht eine dampf- bzw. luftdurchlässige Schicht angeordnet ist.

Die Aufgabe der Erfindung besteht aber auch darin, ein Verfahren zur zweckmässigen Herstellung solcher Rohrleitungselemente zu schaffen. Diese Aufgabe wird dadurch gelöst, dass auf die Oberfläche des Nutzrohrstücks eine dampf- bzw. luftdurchlässige Schicht aufgetragen wird, dass auf der Innenfläche des Mantelrohrstücks eine oder mehrere wasserdichte Schutzschichten aufgebracht werden, dass das mit der dampf- bzw. luftdurchlässigen Schicht versehene Nutzrohrstück und das mit der wasserdichten Schutzschicht versehene Mantelrohrstück konzentrisch ineinandergesteckt werden, so dass das Nutzrohrstück über die beiden Enden des Mantelrohrstückes hinausragt, und dass der zwischen dem Nutzrohrstück und dem Mantelrohrstück befindliche Hohlraum nach Verschliessen seiner stirnseitigen Enden zur Erzeugung der Wärmeisolierschicht mit einem Gemisch aus wärmeisolierenden und schaumbildenden, reagierenden Stoffen gefüllt wird.

Schliesslich besteht die Aufgabe der Erfindung auch darin, ein Verfahren zur Herstellung eines Rohrleitungssystems aus derartigen Rohrleitungselementen zu schaffen. Ihre Lösung ist darin zu sehen, dass zwei vorbereitete Rohrleitungselemente in koaxiale Lage gebracht werden und die aufeinanderstossenden Enden der Nutzrohrstükke zusammengeschweisst werden, woraufhin auf die freie Oberfläche der verschweissten Nutzrohrstücke eine aus einem faserförmigen Wärmeisoliermaterial bestehende, dampfdurchlässige Schicht aufgebracht wird, auf der eine aus vorgefertigten Halbschalen bestehende Wärmeisolierung angeordnet wird, deren Material und Dicke derjenigen der auf den beiden zusammengeschweissten Rohrleitungselementen vorhandenen Wärmeisolierschicht entsprechen, dass danach über der Stossstelle der zusammengeschweissten Rohrleitungselemente eine Muffe angeordnet wird, die sich beidseitig über das Ende jedes der beiden Mantelrohrstücke der miteinander verbundenen Rohrleitungselemente erstreckt, die auf ihrer inneren Oberfläche an ihren beiden Enden mit je zwei Innennuten versehen ist, wobei in den beiden äusseren Nuten Dichtungsringe eingelegt sind und die beiden anderen Nuten Füllbohrungen aufweisen, woraufhin der Zwischenraum zwischen der inneren Oberfläche der Muffe und der äusseren Oberfläche der aus den Halbschalen bestehenden Wärmeisolierung durch eine der Füllbohrungen hindurch mit einem die wasserdichte Schutzschicht bildenden Material solange gefüllt wird, bis das Material nach Verdrängung der Luft aus der anderen Füllbohrung austritt.

Durch die Konstruktion der Rohrleitungselemente wird mit Sicherheit ein Eindringen von Wasser in die Wärmeisolierschicht verhindert und damit deren Isolierwirkung ständig aufrechterhalten, jedoch gleichzeitig während der Montage der Rohrleitungselemente auf die Nutzrohroberfläche gelangte Feuchtigkeit aufgrund der vorhandenen Dampf- und Luftdurchlässigkeit der auf der Nutzrohroberfläche befindlichen Schicht veranlasst, sich zu verflüchtigen. Diese Schicht macht es ausserdem möglich, in dem Isoliermaterial eingeschlossenen Wasserdampf oder sonstige gasförmige Produkte, die möglicherweise erst während des Gebrauchs der Isolierung durch chemische Zersetzung der Isoliermaterialien oder Kondensation entstehen, abzulassen, bevor sie Schaden anrichten können.

Dabei ist von grosser Bedeutung, dass auch dann, wenn mehrere derartige wärmeisolierte Rohrleitungselemente zu Rohrleitungssystemen zusammengebaut werden, diese Systeme insgesamt dieselben vorteilhaften Eigenschaften bezüglich der vorhandenen Wasserdichtigkeit zwischen den äusseren Mantelrohrstücken und der Wärmeisolierschicht und der vorhandenen Dampf- bzw. Luftdurchlässigkeit zwischen den Nutzrohrstücken und der Wärmeisolierung aufweisen.

Vorteilhafte Ausgestaltungen der Erfindung sind in den Unteransprüchen gekennzeichnet.

Der Begriff «Mantelrohrstück» bezieht sich auf die mit der äusseren Umgebung in direkter Berührung stehende äussere Schale des Rohrleitungselementes, die auch aus mehreren Stücken bestehen kann, oder deren Material sich entlang der Länge von aus solchen Rohrleitungselementen zusammengebauten Rohrleitungssystemen ändern kann. Die an das Nutzrohrstück angrenzende dampf- bzw. luftdurchlässige Schicht sichert den Austritt der während der Montage eingeschlossenen Feuchtigkeit, wodurch deren chemische und mechanische schädlichen Wirkungen auf die Wärmeisolierschicht beseitigt wird.

Die Erfindung wird anhand der in der Zeichnung dargestellten Ausführungsbeispiele näher erläutert. In der Zeichnung zeigt:

Fig. 1 den schematischen Querschnitt des erfindungsgemässen Rohrleitungselementes,

Fig. 2a, 2b, 2c die einzelnen Phasen der gegenseitigen Verbindung zweier Röhrleitungselemente im Längsschnitt,

Fig. 3a, 3b eine weitere Möglichkeit zur Verbindung zweier Rohrleitungselemente,

Fig. 4 ein Fixpunktelement zur Verankerung des Rohrleitungssystems,

Fig. 5 die Durchführung eines Rohrleitungselements durch die Wand eines Bauobjektes,

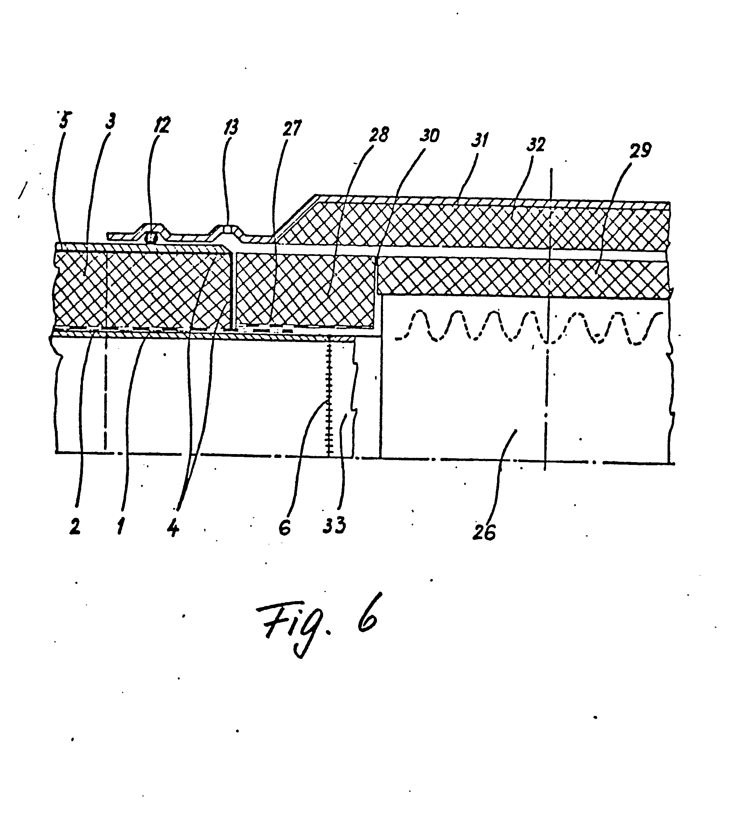

Fig. 6 die Verbindungsweise zwischen einem Kompensator mit Federkörper und einem Rohrleitungselement und

Fig. 7 ein Ausführungsbeispiel für bogenförmige Rohrleitungselemente.

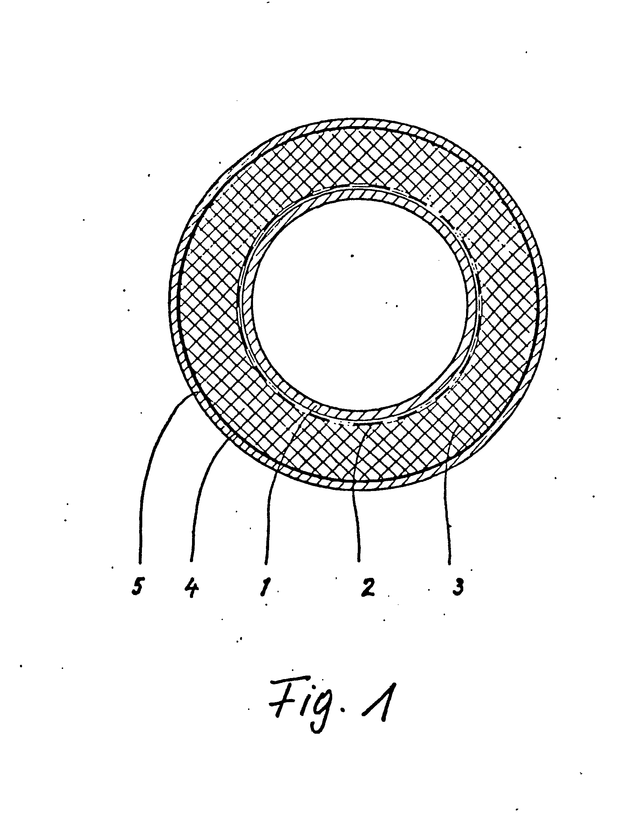

In Fig. 1 ist der Querschnitt eines erfindungsgemässen Rohrleitungselements gezeigt. Das innere, beispielsweise aus Stahl gefertigte Nutzrohrstück 1 ist von der dampf- bzw. luftdurchlässigen Schicht 2, einer aus anorganischem Faserstoff, beispielsweise Glasfaserstoff, bestehenden, und mit offenen Luftdurchlässen versehenen Schicht umhüllt. Die genannte Schicht steht mit der Wärmeisolierschicht 3 in Berührung, die beispielsweise aus einem harten Polyurethanschaum mit offenen Poren, Phenolharzschaum, Furanharzschaum oder Wasserglasschaum gebildet sein kann. Gegebenenfalls können der Phenolharzschaum, der Furanharzschaum und der Wasserglasschaum hydrophobisiert werden. Der Vorteil dieser Stoffe zeigt sich in der hochgradigen Wärmeisolierfähigkeit. Die Wärmeisolierschicht 3 ist von einer oder mehreren wasserdichten Schutzschichten 4 zusammenhängend umhüllt, die aus einem wasserdichten Kunststoff, zweckmässigerweise weichem Polyurethan, Polyester, Polyäthylen, Zelluloseazetat oder einem Material auf Epoxydharzbasis besteht. Die an die Schutzschicht gestellte Grundforderung besteht darin, dass sie eine entsprechend hohe Reissdehnung aufweist und an den sie begrenzenden Materialien gut haftet. Die äussere Schicht der Konstruktion wird von dem eine entsprechende Steifigkeit aufweisenden, gegenüber den Einwirkungen äusserer Medien beständigen, zusammenhängenden, wasserdichten Mantelrohrstück 5 gebildet.

Das Herstellungsverfahren für die erfindungsgemässen Rohrleitungselemente, nämlich gerade Rohre, Rohrbögen, Abzweigrohre, ist folgendes.

Die Rohrstücke eines Rohrleitungselementes werden vorbereitet. Die wasserdichte Schutzschicht 4 kann in Form einer Kunststoffolie auf die Innenfläche des Mantelrohrstückes 5 geklebt werden. Die wasserdichte Schutzschicht 4 kann aber auch als unmittelbar polymerisierendes Reaktionsgemisch (Polymerisation, Polyaddition) auf die Innenfläche des Mantelrohrstücks 5 aufgebracht werden. Auf die Aussenfläche des Nutzrohrstücks 1 wird die dampf- bzw. luftdurchlässige Schicht 2 zweckmässigerweise in Form eines Glasgewebes durch Aufwickeln aufgetragen; danach wird auf die Innenfläche des Mantelrohrstücks 5 das Material der wasserdichten Schutzschicht 4 in flüssigem Zustand aufgetragen, das sich nach erfolgter Polymerisation in einem elastischen, festen, zusammenhängenden und wasserdichten Zustand befindet; woraufhin die solchermassen vorbereiteten Rohrstücke unter Zuhilfenahme von Abstandselementen in eine konzentrische Lage gebracht werden, so dass das Nutzrohrstück 1 über die beiden Enden des Mantelrohrstücks 5 bis zu einem durch die Verbindungsmöglichkeit bestimmten Mass hinausreicht, woraufhin nach dem Abschliessen der Enden in dem zwischen den Rohrstücken vorhandenen Raum eine die wärmeisolierenden und schaumbildenden Stoffe in entsprechender Menge und vorschriftsmässiger Proportion enthaltende Mischung gefüllt wird, die die Wärmeisolierschicht 3 entstehen lässt.

Im letztgenannten Fall wird daher sowohl die Reaktion der Polymerisation wie auch der Schaumbildung an dem Mantelrohrstück 5 bzw. in dem Raum zwischen den Rohrstücken auf an sich bekannte Weise bewirkt.

Durch die oben beschriebene Polymerisationsreaktion können mehrere Schutzschichten an der Innenwand des Mantelrohrstücks 5 ausgebildet werden. Gleichermassen können auf die Innenwand des Mantelrohrstücks 5 mehrere Schutzschichten aufgeklebt oder aufgelegt werden. In diesem Fall können die einzelnen wasserdichten Schutzschichten aus gleichen oder verschiedenen Materialien gefertigt werden.

Man kann auch so verfahren, dass nur an einzelnen Abschnitten der Wand des Mantelrohrstücks 5 die wasserdichte Schutzschicht 4 ausgebildet wird bzw. auf einzelnen Abschnitten der Wand des Mantelrohrstücks 5 weniger, auf anderen Abschnitten mehr von der wasserdichten Schutzschicht 4 aufgetragen wird.

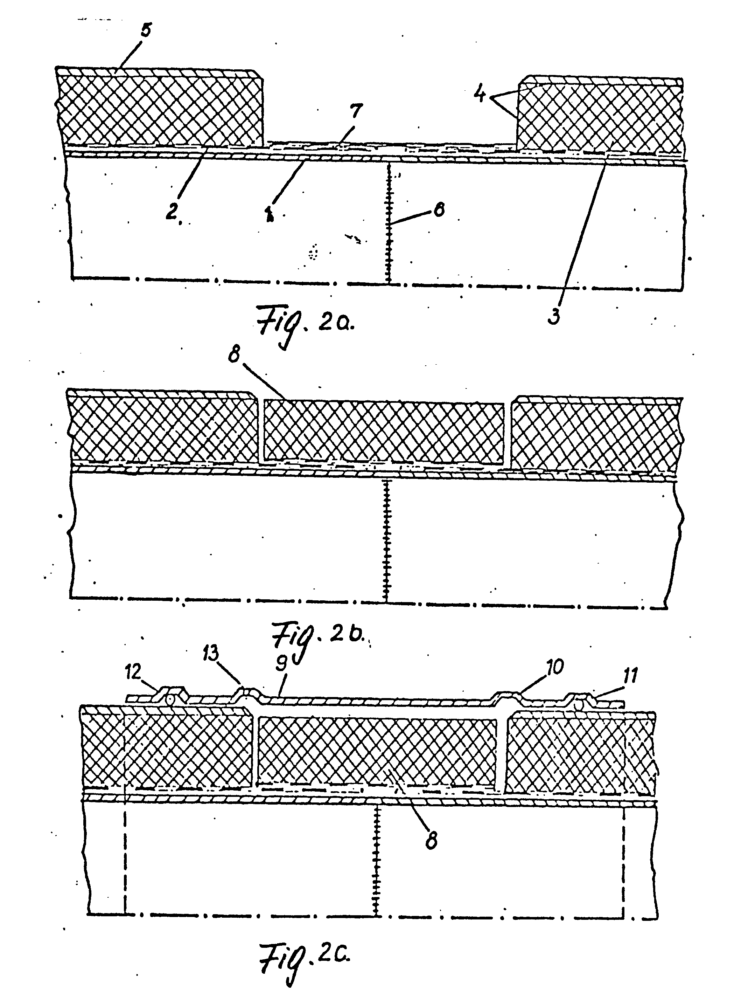

Ein Beispiel für den Verlauf des Zusammenbaus der vorisolierten Rohrleitungselemente an der Baustelle wird im Zusammenhang mit den Fig. 2a, 2b und 2c beschrieben.

Die beiden aufeinanderfolgenden Rohrleitungselemente werden in eine koaxiale Position gebracht, wonach die Enden der Nutzrohrstücke 1 in einer die entsprechende Festigkeit und Dichtigkeit sicherstellenden Weise miteinander verbunden werden. So können z.B. die Enden der Stahlrohrstücke stumpf aneinanderstossen und durch eine Stumpfschweissnaht 6 miteinander verschweisst werden. Um die Kontinuität der dampfdurchlässigen Schicht 2 sicherzustellen, wird die freigebliebene Fläche des Nutzrohrstücks 1 mit einer aufgewickelten, dampfableitenden Schicht 7 aus demselben Material versehen. Die Wärmeisolierschicht wird durch das Aufbringen der Wärmeisolierung, die als Halbschalen 8 in der gleichen Stärke und aus demselben Material vorgefertigt worden ist, auch an den Rohrverbindungsstellen hergestellt. Zwecks Sicherstellung der Kontinuität des Mantelrohres wird über der Zusammenstossstelle die Muffe 9 angeordnet, die an beiden Enden zweckmässigerweise mit Innennuten 10, 11 versehen ist. In den äusseren Innennuten 11 ist jeweils ein Dichtungsring 12 eingelegt, der die primäre Dichtung zwischen dem Mantelrohrstück 5 und der Muffe 9 gewährleistet. In den inneren Innennuten befinden sich Füllbohrungen 13, die bei der Montage oben und zugänglich angeordnet werden. Um die Kontinuität der inneren elastischen, wasserdichten Schutzschicht 4 zu gewährleisten, werden die Spalten über die Füllbohrung 13 der einen Innennut 10 unter Druck solange mit dem gleichen Material aufgefüllt, bis das Material über die Füllbohrung 13 der anderen Innennut nach Verdrängen der Luft herausfliesst.

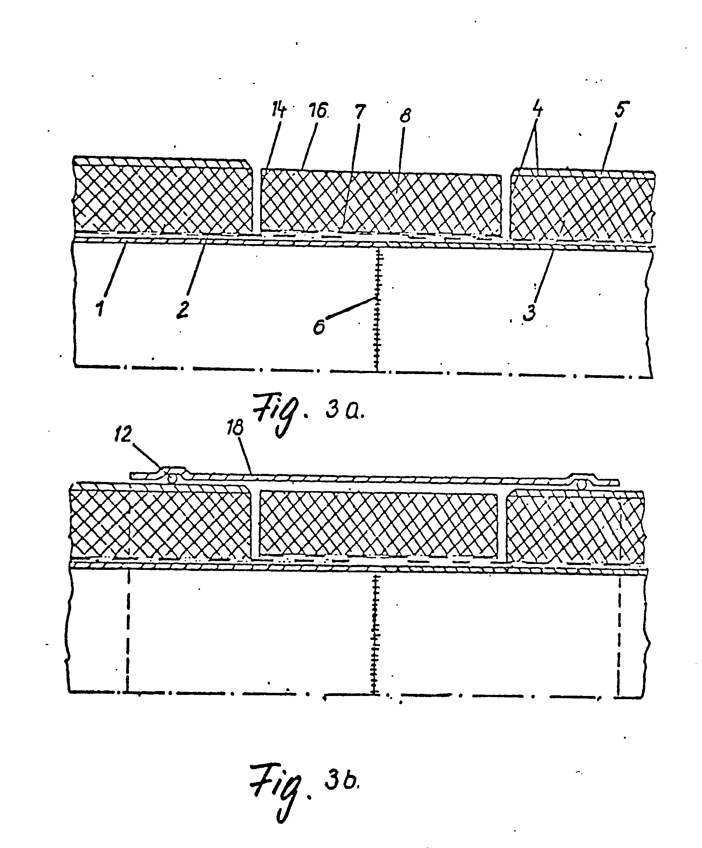

Eine andere Art des Zusammenbaus der Rohrleitungselemente des erfindungsgemässen Rohrleitungssystems wird anhand der Fig. 3a und 3b beschrieben. Die Montage beginnt mit der Herstellung und Kontinuität des inneren Nutzrohres durch die Schweissnaht 6.

An dem Rohrleitungssystem wird dann die Kontinuität der luft- bzw. dampfdurchlässigen Schicht 2 durch das Anbringen der aus einem faserigen Wärmeisolierstoff bestehenden dampfabführenden Schicht 7 hergestellt. Auf dieser wird durch Auftragen mit der Hand eine wasserdichte Schicht 14 gebildet, die zweckmässigerweise aus dem gleichen Material wie die innere wasserdichte Schutzschicht 4 oder einem damit verträglichen Kunststoff besteht. Bei der Herstellung der Schicht muss man darauf achten, dass diese zusammenhängt und die Spalten der Anfangsstrecke des Mantelrohrstücks 5 restlos ausfüllt. Daraufhin wird die wärmeisolierende Schicht 3 an Ort und Stelle ergänzt. Bei dem hier beschriebenen Beispiel werden vorgefertigte Schalen 8 aus hartem Polyurethan aufgesetzt. Auf diese Arbeitsphase folgt die Herstellung des Teils 16 der wasserdichten Schutzschicht 4. Auf diese Weise wird der Wasserdurchgang vielfach gesperrt. Bei dem Ausführungsbeispiel wird die Kontinuität des Mantelrohres mit der Überschiebmuffe 18 und dem Gummiring 12 sichergestellt.

Wie bereits erwähnt, braucht die innere elastische, wasserdichte Schutzschicht 4 nicht über die gesamte Länge des Rohrabschnitts kontinuierlich ausgebildet zu werden. In diesen Fällen kann zur Erhöhung der Sicherheit die Schaumstoffschicht in der Rohrleitung in Strecken unterteilt und streckenweise abgesperrt werden, wodurch bei auftretenden Schäden deren Auswirkung auf den betreffenden Abschnitt beschränkt wird. Selbstverständlich kann diese Bauart auch bei den mit der kontinuierlichen wasserdichten Schutzschicht 4 versehenen Rohren angewendet werden.

Die oben beschriebene Montageweise kann auch auf die Reparatur von in üblicher Weise hergestellten, in dem Mantelrohr isolierten Rohren herkömmlicher Konstruktion angewendet werden. In diesen Fällen besteht der wichtigste Vorteil darin, dass sich die Reparatur nur auf den tatsächlich behandelten Abschnitt auswirkt.

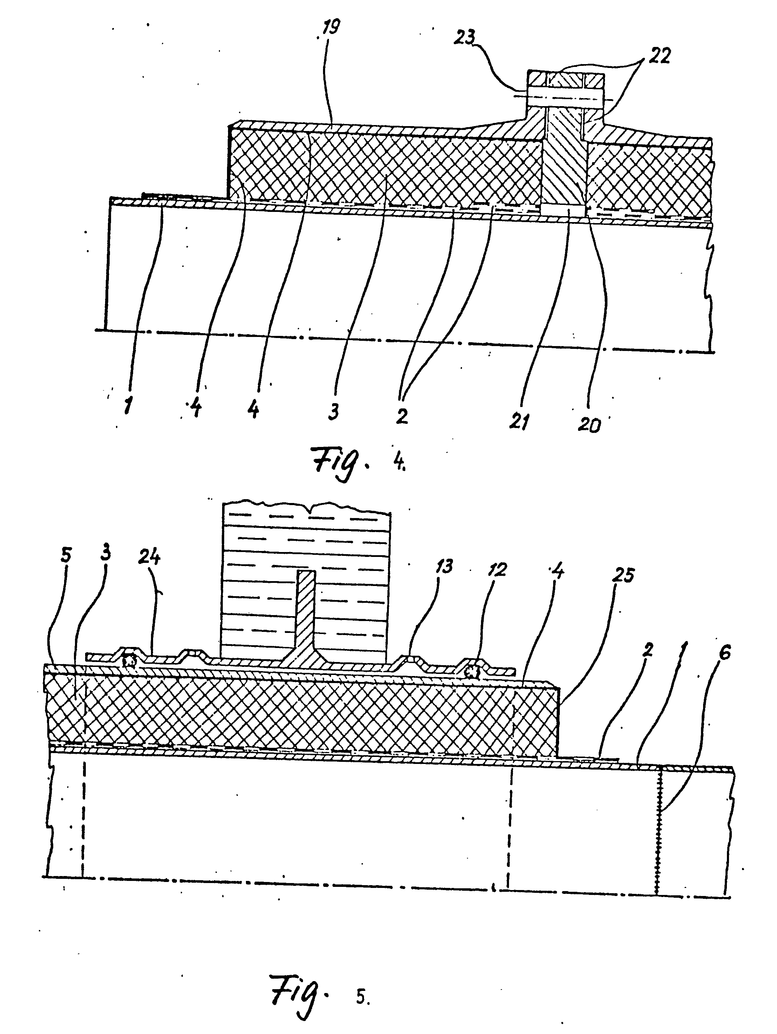

Das für die Verankerung sorgende Fixpunktelement kann beispielsweise in der in Fig. 4 dargestellten Ausführungsform realisiert werden. Das Fixpunktelement ist mit einer an dem Nutzrohrstück 1 befestigten Scheibe 20 versehen, die aus einem eine geeignete Festigkeit aufweisenden Material, beispielsweise Stahlblech gefertigt ist und zur Ableitung der auf das Nutzrohrstück 1 einwirkenden verschiedene Kräfte sowie zur Aufrechterhaltung des Leitungspunktes in seiner fixen Position dient. Die Scheibe 20 wird in der Nähe des Nutzrohrstücks 1 mit luftdurchlässigen Öffnungen 21, zweckmässigerweise Bohrungen, versehen, die die Kontinuität der Luftdurchlässe der dampfabführenden Schicht entlang dem Nutzrohrstück 1 sicherstellen.

Der Mantel des Fixpunktelements wird von zwei geflanschten Rohren 19 gebildet, die an beiden Seiten der Scheibe des Fixpunktelements unter Zwischenschaltung einer an sich bekannten Dichtungsplatte 22 angeordnet und mit Schrauben 23 verbunden werden. Die wasserdichte Schutzschicht 4 kann auch in dem Fixpunktelement ausgebildet werden.

Beim Zusammenbau der erfindungsgemässen voriosierten Rohrleitungselemente zu einem Rohrleitungssystem wird an bestimmten Punkten der Leitung bzw. an gewissen Abschnitten die dampfabführende oder dampfdurchlässige Schicht 2 mit einem grossen Luftraum so verbunden (Fig. 5), dass sich auf dem Nutzrohrstück 1 die dampfabführende Schicht 2, die zweckmässigerweise aus einem faserigen, anorganischen Wärmeisolierstoff besteht, kontinuierlich auf dem in den Innenraum des Bauobjektes hineinragenden Rohrabschnitt über die Isolierungsgrenze hinauserstreckt. Als Fortsetzung der wasserdichten Schutzschicht 4 wird ein wasserundurchlässiger Film 25 erzeugt. Auf diese Weise wird das Eindringen von Wasser praktisch ausgeschlossen, gleichzeitig aber die Möglichkeit zur Belüftung des Isoliersystems zwecks Verdampfung des Wassers aus dem Wärmeisoliermaterial aufrechterhalten.

Das erfindungsgemäss aufgebaute isolierte Rohrleitungselement kann unter Zuhilfenahme einer in Fig. 5 dargestellten Wandmuffe 24 durch die Wand eines Gebäudes hindurchgeführt werden. Die Muffe weist einen scheibenförmigen Vorsprung zur Befestigung in der Wand und zur Herausführung der Wärmeisolierung in an sich bekannter Weise auf. Zweckmässigerweise wird die Wandmuffe 24 mit je zwei Innennuten versehen, deren Form an die doppelte Sicherheit bietende Dichtung in dem äusseren Nutenpaar, das die Dichtungsringe 12 aufnimmt, angebracht ist, während durch die in dem innen liegenden Nutenpaar vorhandenen Füllbohrungen 13 ein mit dem Material der wasserdichten Schutzschicht 4 übereinstimmendes Material eingefüllt wird.

Zur Aufnahme der Wärmedehnung wird beim Zusammenbau der über verbesserte Eigenschaften verfügenden wärmeisolierten Rohrleitungselemente ein an sich bekannter Federkörper-Kompensator 26 verwendet, dessen Rohrelement 33 an dem Nutzrohrstück 1 befestigt wird, und zwar bei einem Stahlrohr mittels der Schweissnaht 6.

Die Verlängerung der dampf- bzw. luftdurchlässigen Schicht 2 bis zur Grenze der Kompensator-Wellen geschieht mit Hilfe des faserigen Wärmeisolierstoffes 27. Die Kontinuität der Wärmeisolierung im Bereich des Federkörper-Kompensators 26 wird dadurch erreicht, dass eine halbschalenförmige Wärmeisolierschicht 26, die zweckmässigerweise aus hartem Polyurethanschaum besteht, auf das Leitungsrohr, sowie eine ebenfalls halbschalenförmige Wärmeisolierschicht 29 auf das Mantelrohr des Federkörper-Kompensators 26 aufgelegt werden. Die Wärmeisolierschichten 28, 29 werden in ihrer Lage befestigt, und der zwischen ihnen vorhandene Spalt mit Kitt 30 verschlossen, der zweckmässigerweise aus einem mit der wasserdichten Schutzschicht 4 identischen Material besteht, aber über die gewünschte Konsistenz verfügt. Daraufhin wird die Muffe 31 über den Federkörper-Kompensator 26 gezogen. Die Muffe weist in ihrem mittleren Abschnitt einen vergrösserten Durchmesser auf, so dass sie innen zweckmässigerweise mit einer Wärmeisolierung 32 aus hartem Polyurethanschaum versehen werden kann, wodurch auch in diesem Abschnitt die vollwertige Wärmeisolierung des Rohrleitungssystems erreicht wird. Die beiden Enden der Muffe 31 sind mit je zwei Innennuten versehen, von denen das äussere Paar zur Aufnahme der Dichtungsringe 12 dient, während die Füllbohrungen 13 des inneren Paares die Einfüllung eines Füllmaterials ermöglichen, das dem Material der wasserdichten Schutzschicht 4 gleich ist.

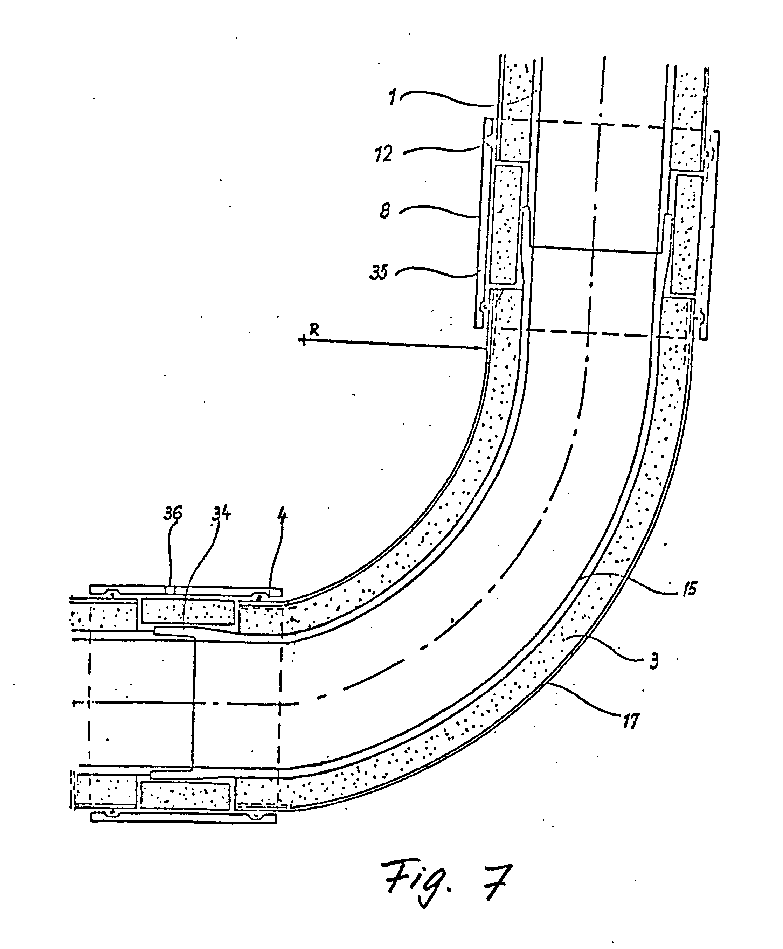

In Fig. 7 ist ein wärmeisoliertes, bogenförmiges Rohrleitungselement sowie eine weitere Möglichkeit zur Verbindung der Rohrleitungselemente veranschaulicht. In dem gebogenen Abschnitt befindet sich das Nutzrohrstück 15 das bei diesem Ausführungsbeispiel mit einer Muffe 34 zur Herstellung der Klebeverbindung versehen ist. Das bogenförmige Mantelrohrstück 17 und das Nutzrohrstück 15 haben einen gemeinsamen Krümmungsmittelpunkt. Bei diesem Ausführungsbeispiel sind beide bogenförmige Rohrstücke mit Mineralstoff gefüllt und aus einem glasfaserverstärkten, unter Wärmewirkung erhärtenden Kunststoff gefertigt. Die wasserdichte Schutzschicht 4 ist nur an den Enden des Mantelrohrstücks aufgetragen. Der Raum zwischen dem Nutzrohrstück und dem Mantelrohrstück ist mit einer Wärmeisolierschicht 3 aus Polyurethanschaum ausgefüllt. Beim Zusammenbau der Rohrleitungselemente der wärmeisolierten Rohrleitung wird das konische Spitzende des Nutzrohrstücks 1 in die Muffe 34 des gebogenen Nutzrohrstücks 15 eingesteckt und bei diesem Ausführungsbeispiel mit ihm verklebt. Daraufhin werden die wärmeisolierenden Halbschalen 8 aufgesetzt, und die Muffe 35, die zweckmässigerweise aus einem glasfaserverstärkten Kunststoff besteht, wird über die Stossstelle gezogen. In die Nuten der Muffe werden die Gummiringe 12 vorher eingesetzt. Der Raum zwischen der Muffe 35 und den Halbschalen 8 wird über die Füllbohrung 36 mit einem dem Material der wasserdichten Schutzschicht 4 entsprechenden Material ausgefüllt. Nach erfolgter Erhärtung des Kunststoffes ist die Kontinuität der wasserdichten Schutzschicht gegeben.

**Patentansprüche**

1. Wärmeisoliertes Rohrleitungselement, mit einem inneren Nutzrohrstück (1) und einem dieses konzentrisch umgebenden Mantelrohrstück (5) sowie einer zwischen dem Nutzrohrstück und dem Mantelrohrstück befindlichen Wärmeisolierschicht (3), dadurch gekennzeichnet, dass sich zwischen dem Mantelrohrstück (5) und der Wärmeisolierschicht (3) mindestens eine wasserdichte Schutzschicht (4) befindet, und dass zwischen dem Nutzrohrstück (1) und der Wärmeisolierschicht (3) eine dampf- bzw. luftdurchlässige Schicht (2) angeordnet ist.

2. Rohrleitungselement nach Anspruch 1, dadurch gekennzeichnet, dass die dampf- bzw. luftdurchlässige Schicht (2) aus einem faserigen Wärmeisoliermaterial, insbesondere Glasfasern oder Glasfasergewebe, besteht.

3. Rohrleitungselement nach Anspruch 1 oder 2, dadurch gekennzeichnet, dass das Mantelrohrstück (5) aus Metallblech und/oder einer wärmebeständigen Materialkombination erhöhter Festigkeit besteht.

4. Rohrleitungselement nach Anspruch 3, dadurch gekennzeichnet, dass die Materialkombination ein glasfaserverstärktes, mit einer Mineralstofffüllung versehenes, durch Wärmeeinwirkung aushärtendes Kunststoffmaterial ist.

5. Rohrleitungselement nach einem der Ansprüche 1 bis 4, dadurch gekennzeichnet, dass die Wärmeisolierschicht (3) aus Phenolharzschaum, Furanharzschaum oder Wasserglasschaum hergestellt ist, die gegebenenfalls hydrophobisiert und/oder mit Polyurethanschaum kombiniert sind.

6. Rohrleitungselement nach einem der Ansprüche 1 bis 5, das als Fixpunktelement ausgebildet ist, dadurch gekennzeichnet, dass zur Verankerung des Rohrleitungselementes an einem Fixpunkt eine auf dem Nutzrohrstück (1) befestigte, das Mantelrohr radial überragende Stahlscheibe (20) vorgesehen ist, die über der Oberfläche des Nutzrohrstücks (1) in Axialrichtung verlaufende Luftdurchgangsöffnungen (21) aufweist, und dass das Mantelrohr aus zwei mit je einem Flansch versehenen Rohrstücken (19) besteht, deren Flanschen unter Zwischenlage von Dichtungsscheiben (22) lösbar an der Stahlscheibe (20) befestigt sind (Fig. 4).

7. Rohrleitungselement nach einem der Ansprüche 1 bis 5, das als Wanddurchführung ausgebildet ist, dadurch gekennzeichnet, dass über dem Mantelrohrstück (5) eine mit einem scheibenförmigen Vorsprung zur Befestigung in der Wand versehene Wandmuffe (24) angeordnet ist (Fig. 5).

8. Rohrleitungselement nach einem der Ansprüche 1 bis 7, dadurch gekennzeichnet, dass das Nutzrohrstück (1) über das Ende der Wärmeisolierschicht (3) und des Mantelrohrstücks (5) hinausragt, dass die dampf- bzw. luftdurchlässige Schicht (2) etwas über das Ende der Wärmeisolierschicht (3) vorsteht, und dass das stirnseitige Ende der Wärmeisolierschicht von der wasserdichten Schutzschicht (4) abgedeckt ist, die sich bis zu der überstehenden dampf- bzw. luftdurchlässigen Schicht (2) erstreckt.

9. Rohrleitungssystem bestehend aus aufeinanderfolgenden Rohrleitungselementen nach Anspruch 8, deren frei überstehende Nutzrohrstückenden miteinander verbunden sind, dadurch gekennzeichnet, dass auf den Oberflächen der über die Wärmeisolierschicht (3) und die Mantelrohrstücke (5) hinausragenden Enden der Nutzrohrstücke (2) zweier aufeinanderfolgender Rohrleitungselemente eine aus einem faserförmigen Wärmeisolierstoff bestehende, dampfdurchlässige Schicht (7) angeordnet ist, über der eine den Raum zwischen den in Axialrichtung mit Abstand getrennten Isolierschichten (3) der beiden Nutzrohrstücke (1) ausfüllende Wärmeisolierung (8) ringförmigen Querschnitts angeordnet ist, die von einer Muffe (9, 18) abgedeckt wird, welche sich über die axialen Enden der Wärmeisolierung (8) hinaus auf die Oberflächen der beiden Mantelrohrstücke (5) erstreckt.

10. Rohrleitungssystem nach Anspruch 9, dadurch gekennzeichnet, dass der Raum zwischen der Muffe (9) und der sich unter ihr befindenden Wärmeisolierung (8) mit einem eine wasserdichte Schutzschicht bildenden Material ausgefüllt ist.

11. Rohrleitungssystem nach Anspruch 9 oder 10, gekennzeichnet durch einen an sich bekannten Federkörperkompensator (26) zur Kompensation von Wärmedehnungen, der an beiden Enden ein an das überstehende Ende des Nutzrohres (1) des benachbarten Rohrelementes angeschweisstes Rohrelement (33) aufweist, über dem eine auch das überstehende Ende des Nutzrohres überdeckende dampfabführende, faserförmige Wärmeisoliermaterialschicht (27) angeordnet ist, auf der eine Wärmeisolierschicht (28, 29) sitzt, die auch den Kompensationsteil des Federkörperkompensators (26) überdeckt und über die sich eine auf ihrer Innenseite mit einer weiteren Wärmeisolierung (32) versehene und von der Wärmeisolierschicht (28, 29) mit Abstand getrennte Muffe (31) bis auf die Oberfläche des Mantelrohrstückes (5) des benachbarten Rohrelementes erstreckt, wobei der Raum zwischen der Wärmeisolierschicht (28, 29) und der Wärmeisolierung (32) der Muffe (31) mit einer Schutzschicht aus wasserundurchlässigem Material ausgefüllt ist.

12. Verfahren zur Herstellung des Rohrleitungselementes nach einem der Ansprüche 1 bis 8, dadurch gekennzeichnet, dass auf die Oberfläche des Nutzrohrstücks (1) eine dampf- bzw. luftdurchlässige Schicht (2) aufgetragen wird, dass auf der Innenfläche des Mantelrohrstücks (5) eine oder mehrere wasserdichte Schutzschichten (4) aufgebracht werden, dass das mit der dampf- bzw. luftdurchlässigen Schicht (2) versehene Nutzrohrstück (1) und das mit der wasserdichten Schutzschicht (4) versehene Mantelrohrstück (5) konzentrisch ineinandergesteckt werden, so dass das Nutzrohrstück (1) über die beiden Enden des Mantelrohrstückes (5) hinausragt, und dass der zwischen dem Nutzrohrstück (1) und dem Mantelrohrstück (5) befindliche Hohlraum nach Verschliessen seiner stirnseitigen Enden zur Erzeugung der Wärmeisolierschicht (3) mit einem Gemisch aus wärmeisolierenden und schaumbildenden, reagierenden Stoffen gefüllt wird.

13. Verfahren nach Anspruch 12, dadurch gekennzeichnet, dass als wasserdichte Schutzschicht (4) ein flüssiges Kunstharz auf die Innenfläche des Mantelrohrstückes (5) im Bereich der Rohrenden oder der gesamten Rohrlänge aufgetragen wird, welches danach durch Polymerisation eine elastische, auf der Rohroberfläche haftende, zusammenhängende Materialschicht entstehen lässt.

14. Verfahren zur Herstellung eines Rohrleitungssystems nach einem der Ansprüche 9 bis 11, dadurch gekennzeichnet, dass zwei vorbereitete Rohrleitungselemente in koaxiale Lage gebracht werden und die aufeinanderstossenden Enden der Nutzrohrstücke (1) zusammengeschweisst werden, woraufhin auf die freie Oberfläche der verschweissten Nutzrohrstücke eine aus einem faserförmigen Wärmeisoliermaterial bestehende, dampfdurchlässige Schicht (7) aufgebracht wird, auf der eine aus vorgefertigten Halbschalen (8) bestehende Wärmeisolierung angeordnet wird, deren Material und Dicke derjenigen der auf den beiden zusammengeschweissten Rohrleitungselementen vorhandenen Wärmeisolierschicht (3) entsprechen, dass danach über der Stossstelle der zusammengeschweissten Rohrleitungselemente eine Muffe (9) angeordnet wird, die sich beidseitig über das Ende jedes der beiden Mantelrohrstücke (5) der miteinander verbundenen Rohrleitungselemente erstreckt, die auf ihrer inneren Oberfläche an ihren beiden Enden mit je zwei Innennuten (10, 11) versehen ist, wobei in den beiden äusseren Nuten (11) Dichtungsringe (12) eingelegt sind und die beiden anderen Nuten (10) Füllbohrungen (13) aufweisen, woraufhin der Zwischenraum zwischen der inneren Oberfläche der Muffe (9) und der äusseren Oberfläche der aus den Halbschalen (8) bestehenden Wärmeisolierung durch eine der Füllbohrungen (13) hindurch mit einem die wasserdichte Schutzschicht bildenden Material solange gefüllt wird, bis das Material nach Verdrängung der Luft aus der anderen Füllbohrung austritt.

15. Verfahren zur Herstellung eines Rohrleitungssystems nach Anspruch 9 oder 10, wobei die Enden der Nutzrohrstücke (1, 15) eine Muffenverbindung aufweisen, dadurch gekennzeichnet, dass jeweils zwei Rohrleitungselemente zwecks Verbindung in eine koaxiale Lage gebracht werden, dass die einander zugewandten Nutzrohrenden dieser Elemente mit einem Klebemittel bestrichen werden, wonach das mit der Muffe (34) versehene Rohrende des einen Nutzrohrstückes (15) über das konisch ausgebildete Spitzende des anderen Nutzrohrstückes (1) geschoben wird, worauf  hin über diesem Verbindungsbereich der beiden Rohrleitungselemente eine aus Halbschalen bestehende Wärmeisolierung angeordnet wird und eine an ihren beiden Enden mit Dichtungsringen (12) versehene Muffe (35) über die Wärmeisolierung und die angrenzenden Mantelrohrstückenden geschoben wird und über eine Füllbohrung (36) der Muffe zur Bildung der wasserdichten Schutzschicht ein Material in den zwischen der Wärmeisolierung und der Muffe vorhandenen Raum eingefüllt wird.

## Claims

1. Heat insulated pipeline-element, comprising an inner effective tubepiece (1) and a housing tubepiece (5) surrounding concentrically that effective tubepiece as well as a heat insulating layer (3) positioned between the effective tubepiece and the housing tubepiece, characterized in that at least one waterproof protective layer (4) is positioned between the housing tubepiece (5) and the heat insulating layer (3) and that a vapour-permeable and air-permeable layer (2) is respectively arranged between the active tubepiece (1) and the heat insulating layer (3).

2. Pipeline-element according to claim 1, characterized in that the vapour- and air-permeable layer (2) consists of a fibrous heat insulating material, especially fiber glass or fiber glass web.

3. Pipeline-element according to claim 1 or 2, characterized in that the housing tubepiece (5) consists of metalsheet and/or a heat resistent combination of material of higher strength.

4. Pipeline-element according to claim 3, characterized in that the combination of material consists of a fiber glass reinforced plastic material provided with a mineral filling and being durable by heat exposure.

5. Pipeline-element according to one of the claims 1–4, characterized in that the heat insulating layer (3) is manufactured of phenol resin foam, furan resin foam or water glass foam which is also hydrophobic and/or combined with polyurethane foam.

6. Pipeline-element according to one of the claims 1–5, formed as a fixed point element, characterized in that for anchoring purposes the pipeline-element is attached to the effective tubepiece (1) about a fixed point by a plate (20) of steel radially extending beyond the housing tube, which plate is provided with air-stream openings (21) extending in axial direction on the surface of the effective tubepiece (1), and that the housing tube consists of two tubepieces (19) each of which is provided with a flange, which flanges are detachably connected to the steel plate (20) by an intermediate layer of sealing plates (22) (Fig. 4).

7. Pipeline-element according to one of the claims 1–5, formed as a conduct through a wall, characterized in that a wall sleeve (24) is positioned on the housing tubepiece (5) provided with a disc-like protrusion for the connection in the wall (Fig. 5).

8. Pipeline-element according to one of the claims 1–7, characterized in that the effective tubepiece (1) is extending beyond the end of the heat insulating layer (3) and the housing tubepiece (5), that the vapour- and air-permeable layer (2) extends a little beyond the end of the heat insulating layer (3), and that the front-facing end of the heat insulating layer is covered by the waterproof protective layer (4) extending to the protruding vapour- and air-permeable layer (2).

9. Pipeline-system consisting of pipeline-elements according to claim 8, succeeding one another, the free protruding ends of the effective tubepieces are connected to one another, characterized in that on the surfaces of the ends of the effective tubepieces (2) of two succeeding pipeline-elements extending beyond the heat insulating layer (3) and the housing tubepieces (5) a vapour-permeable layer (7) is located consisting of fibrous heat insulating material, over which layer a heat insulation (8) of annular cross-section is positioned filling out the space between an axial direction distantly separated insulating layers (3) of the two effective tubepieces (1), which heat insulation (8) is covered by a sleeve (9, 18) extending beyond the axial ends of the heat insulation (8) onto the surfaces of the two housing tubepieces (5).

10. Pipeline-system according to claim 9, characterized in that the space between the sleeve (9) and the heat insulation (8) below is filled by a material forming a waterproof protective layer.

11. Pipeline-system according to claim 9 or 10, characterized by a spring body compensator (26) known per se for the compensation of thermal extensions, provided at its both ends with a tube element (33) welded to the protruding end of the effective tube (1) of the adjacent tube element, on which a vapour guiding, fibrous layer (27) of heat insulating material covering also the protruding end of the effective tube is positioned, on which layer a heat insulating layer (28, 29) is located covering also the spring body compensator (26) and over which a sleeve (31) extends provided on its inner surface with a further heat insulation (32) and being spacely separated from the heat insulating layer (28, 29), which sleeve extends onto the surface of the housing tubepieces (5) of the adjacent tube element, and that the space between the heat insulating layer (28, 29) and the heat insulation (32) of the sleeve (31) is filled with a protective layer of water impermeable material.

12. Method for manufacturing the pipeline-element according to one of the claims 1–8, characterized in that a vapour- or air-permeable layer (2) is prepared on the surface of the effective tubepiece (1), that one or several waterproof protective layers (4) are prepared on the inner face of the housing tubepiece (5), that the effective tubepiece (1) provided with a vapour- or air-permeable layer (2) and a housing tubepiece (5) provided with the waterproof protective layer (4) are concentrically inserted into one another so that the effective tubepiece (1) extends over the two ends of the housing tubepiece (5), and that into the cavity between the effective tubepiece (1) and the housing tubepiece (5) after it had been closed at its front side ends a mixture of heat insulation, foam-forming, reacting products is filled in order to establish the heat insulating layer (3).

13. Method according to claim 12, characterized in that a liquid resin is applied on the inner surface of the housing tubepiece (5) in the region of the tube ends or the whole tube-length as a waterproof protective layer (4), which matures thereafter by polymerisation into an elastic coherent layer of material, adhering to the surface of the tube.

14. Method for manufacturing a pipeline-system according to one of the claims 9–11, characterized in that two prepared pipeline-systems are arranged coaxially to one another and that the abutting ends of the effective tubepieces (1) are welded together, whereafter a vapour-permeable layer (7) consisting of a fibrous heat insulating material is positioned onto the free surface of the welded effective tubepieces, on which layer a heat insulation consisting of premanufactured half-sleeves (8) is positioned, the material and thickness of which correspond to that of the heat insulating layer (3) on both pipeline-elements welded together, whereafter a sleeve (9) is positioned upon the point ob abuttment of the pipeline-elements welded together, which sleeve extends on both sides beyond the end of each of the two housing tubepieces (5) of the connected pipeline-elements, and which is provided on its inner surface at its both ends with two inside grooves (10, 11), the two outer grooves (11) are provided with sealing rings (12) and the two other grooves (10) are provided with filling openings (13), whereafter the intermediate space between the inner surface of the sleeve (9) and the outer surface of the heat insulation consisting of half-sleeves (8) are filled through one of the filling openings (13) with a material forming the waterproof protective layer until this material after having displaced the air emerges from the other filling openings.

15. Method for manufacturing a pipeline-system according to claim 9 or 10, wherein the ends of the effective tubepieces (1, 15) are provided with a sleeve connection, characterized in that respectively two pipeline-elements are for the purpose of connection put in a co-axial position, that the ends of the effective tubes of those elements facing one another are provided with an adhesive, whereafter that tube-end of the one effective tubepiece (15) provided with a sleeve (34) is pushed over the conically configured, pointed end of the other effective tubepiece (1), whereafter over that connection region of the two pipeline-elements a heat insulation consisting of half sleeves is positioned and a sleeve (35) provided at its ends with sealing rings (12) is pushed over the heat insulation and the adjacent ends of the housing tubepieces and a material for providing the waterproof protective layer is filled through a filling opening (36) of the sleeve into the space between the heat insulation and the sleeve.

## Revendications

1. Elément de canalisation isolé thermiquement, avec un morceau de tuyau utile interne (1) et un morceau de tube d'enveloppe (5) l'entourant concentriquement, ainsi qu'une couche isolante thermiquement (3) se trouvant entre le morceau de tuyau utile et le morceau de tube d'enveloppe, caractérisé en ce qu'entre le morceau de tube d'enveloppe (5) et la couche isolante thermiquement (3) se trouve au moins une couche protectrice étanche à l'eau (4), et en ce qu'entre le morceau de tuyau utile (1) et la couche isolante thermiquement (3) est agencée une couche perméable à la vapeur et à l'air (2).

2. Elément de canalisation suivant la revendication 1, caractérisé en ce que la couche perméable à la vapeur et à l'air (2) est constituée par une matière isolante thermiquement fibreuse, en particulier des fibres de verre ou un tissu de fibres de verre.

3. Elément de canalisation suivant la revendication 1 ou 2, caractérisé en ce que le morceau de tube d'enveloppe (5) est constitué par une tôle métallique et/ou une combinaison de matières résistant à la chaleur avec une solidité accrue.

4. Elément de canalisation suivant la revendication 2, caractérisé en ce que la combinaison de matières est une matière synthétique renforcée par des fibres de verre, dotée d'un garnissage de matière minérale et durcissant sous l'effet de la chaleur.

5. Elément de canalisation suivant l'une des revendications 1 à 4, caractérisé en ce que la couche isolante thermiquement (3) est fabriquée à partir de mousse de résine phénolique, de mousse de résine de furanne ou de mousse de silicate de soude, qui est éventuellement rendue hydrophobe et/ou combinée avec une mousse de polyuréthanne.

6. Elément de canalisation suivant l'une des revendications 1 à 5, qui est réalisé en tant qu'élément de point fixe, caractérisé en ce que pour ancrer l'élément de canalisation autour d'un point fixe, un disque d'acier (20) fixé sur le morceau de tuyau utile (1), dépassant radialement du tube d'enveloppe, est prévu et il présente des ouvertures de passage d'air (21) s'étendant suivant une direction axiale au-delà de la surface du morceau de tuyau utile (1), et en ce que le tube d'enveloppe est constitué par deux morceaux de tube (19) dotés chacun d'une bride, dont les brides sont fixées de manière libérable au disque d'acier (20) en interposant des disques d'étanchéité (22) (figure 4).

7. Elément de canalisation suivant l'une des revendications 1 à 5, qui est réalisé en tant que traversée de mur, caractérisé en ce que sur le morceau de tube d'enveloppe (5) est agencé un manchon mural (24) doté d'une saillie en forme de disque pour la fixation dans le mur (figure 5).

8. Elément de canalisation suivant l'une des revendications 1 à 7, caractérisé en ce que le morceau de tuyau utile (1) s'étend au-delà de l'extrémité de la couche isolante thermiquement (3) et du morceau de tube d'enveloppe (5), en ce que la couche perméable à la vapeur et à l'air (2) fait saillie légèrement au-delà de l'extrémité de la couche isolante thermiquement (3), et en ce que l'extrémité frontale de la couche isolante thermiquement est recouverte par la couche protectrice étanche à l'eau (4), qui s'étend jusqu'à la couche perméable à la vapeur et à l'air (2) en saillie.

9. Système de canalisation, constitué par des éléments de canalisation successifs suivant la revendication 8, dont les extrémités de morceau de tuyau utile en saillie libre sont reliées entre elles, caractérisé en ce que sur la surface des extrémités des morceaux de tuyau utile (2) dépassant au-delà de la couche isolante thermiquement (3) et des morceaux de tube d'enveloppe (5) de deux éléments de canalisation successifs, est agencée une couche perméable à la vapeur (7) constituée par une matière isolante thermiquement fibreuse, sur laquelle est disposée un isolement thermique (8) à section transversale annulaire remplissant l'espace entre les couches isolantes (3) séparées par un intervalle dans le sens axial des deux morceaux de tuyau utile (1), isolement qui est recouvert par un manchon (9, 18) qui s'étend au-delà des extrémités axiales de l'isolement thermique (8) sur les surfaces des deux morceaux de tube d'enveloppe (5).

10. Système de canalisation suivant la revendication 9, caractérisé en ce que l'espace entre le manchon (9) et l'isolement thermiquement (8) situé en dessous de lui est rempli par une matière formant une couche protectrice étanche à l'eau.

11. Système de canalisation suivant la revendication 9 ou 10, caractérisé par un compensateur à corps de ressort (26) connu en soi pour la compensation des dilatations thermiques, qui présente aux deux extrémités un élément de tuyau (33) soudé à l'extrémité en saillie du tuyau utile (1) de l'élément de canalisation adjacent, sur lequel est disposée une couche de matière isolante thermiquement fibreuse (27) évacuant la vapeur et recouvrant également l'extrémité en saillie du tuyau utile, sur laquelle repose une couche isolante thermiquement (28, 29) qui recouvre aussi le compensateur à corps de ressort (26) et sur laquelle s'étend jusqu'à la surface du morceau de tube d'enveloppe (5) de l'élément de canalisation adjacent, un manchon (31) doté sur sa face interne d'un autre isolement thermique (32) et séparé par un intervalle de la couche isolante thermiquement (28, 29), l'espace entre la couche isolante thermiquement (28, 29) et l'isolement thermique (32) du manchon (31) étant rempli d'une couche protectrice en une matière imperméable à l'eau.

12. Procédé de fabrication de l'élément de canalisation suivant l'une des revendications 1 à 8, caractérisé en ce que sur la surface du morceau de tuyau utile (1) est appliquée une couche perméable à la vapeur et à l'air (2), en ce que sur la surface interne du morceau de tube d'enveloppe (5) sont appliquées une ou plusieurs couches protectrices étanches à l'eau (4), en ce que le morceau de tuyau utile (1) doté de la couche perméable à la vapeur et à l'air (2) et le morceau de tube d'enveloppe (5) doté de la couche protectrice étanche à l'eau (4) sont enfilés concentriquement l'un dans l'autre, de telle sorte que le morceau de tuyau utile (1) dépasse au-delà des deux extrémités du morceau de tube d'enveloppe (5), et en ce que l'espace libre situé entre le morceau de tuyau utile (1) et le morceau de tube d'enveloppe (5) est rempli après l'obturation de ses extrémités frontales et pour produire la couche isolante thermiquement (3), d'un mélange de matières réactives isolantes thermiquement et formant une mousse.

13. Procédé suivant la revendication 12, caractérisé en ce qu'on applique en tant que couche protectrice étanche à l'eau (4), une résine synthétique liquide sur la surface interne du morceau de tube d'enveloppe (5), au voisinage des extrémités de tube ou sur l'ensemble de la longueur du tube, qui permet ensuite la formation par polymérisation d'une couche de matière élastique cohérente, adhérant à la surface du tube.

14. Procédé pour la réalisation d'un système de canalisation suivant l'une des revendications 9 à 11, caractérisé en ce que deux systèmes de canalisation préparés sont amenés en position axiale et les extrémités se rencontrant des morceaux de tuyau utile (1) sont soudées entre elles, après quoi sur la surface libre des morceaux de tuyau utile soudés est appliquée une couche perméable à la vapeur (7), constituée par une matière isolante thermiquement fibreuse, sur laquelle est disposé un isolement thermique constitué par des demi coquilles préfabriquées (8), dont la matière et l'épaisseur correspondent à celles de la couche isolante thermiquement (3) présente sur les deux éléments de canalisation soudés entre eux, en ce qu'ensuite sur l'endroit de rencontre des éléments de canalisation soudés entre eux est agencé un manchon (9) qui s'étend de part et d'autre au-delà de l'extrémité de chacun des deux morceaux de tube d'enveloppe (5) des éléments de canalisation reliés entre eux, manchon qui est doté sur sa surface interne, à ses deux extrémités, de deux gorges internes (10, 11), des bagues d'étanchéité (12) étant placées dans les deux gorges externes (11) et les deux autres gorges (10) présentant des alésages de remplissage (13), après quoi l'espace intermédiaire entre la surface interne du manchon (9) et la surface externe de l'isolement thermique constitué par les demi coquilles (8) est rempli à travers l'un des alésages de remplissage (13) avec une matière formant la couche protectrice étanche à l'eau, jusqu'à ce que la matière, après avoir chassé l'air, s'échappe par l'autre alésage de remplissage.

15. Procédé pour la réalisation d'un système de canalisation suivant la revendication 9 ou 10, les extrémités des morceaux de tuyau utile (1, 15) présentant une liaison par manchon, caractérisé en ce que deux éléments de canalisation sont à chaque fois placés en une position coaxiale pour la liaison, en ce que les extrémités de tuyau utile dirigées l'une vers l'autre de ces éléments sont enduites d'un adhésif, après quoi l'extrémité de tuyau dotée du manchon (34) d'un des morceaux de tuyau utile (15) est glissée sur l'extrémité de pointe réalisée coniquement de l'autre morceau de tuyau utile (1), après quoi sur cette zone de liaison des deux éléments de canalisation est disposé un isolant thermique constitué par des demi coquilles et un manchon (35) doté à ses deux extrémités de bagues d'étanchéité (12) est enfilé sur l'isolement thermique et les extrémités de morceau de tube d'enveloppe limitrophes, et par l'intermédiaire d'un alésage de remplissage (36) du manchon, une matière est introduite dans l'espace existant entre l'isolement thermique et le manchon, afin de former la couche protectrice étanche à l'eau.

Fig. 1

Fig. 2a.

Fig. 2b.

Fig. 2c.

Fig. 3a.

Fig. 3b.

Fig. 4.

Fig. 5.

Fig. 6

Fig. 7